# EUROPEAN PATENT SPECIFICATION

(11) **EP 2 265 035 B1**
(45) Date of publication and mention of the grant of the patent: **25.12.2013**
(21) Application number: 09290450.7
(22) Date of filing: 15.06.2009
(51) Int. Cl.: H04Q 3/52, H04J 14/02, H04Q 11/00

(54) **Method and equipment for buffering optical packets**
Verfahren und Ausrüstung zur Pufferung von optischen Paketen
Procédé et équipement pour la mise en tampon de paquets optiques

(43) Date of publication of application: 22.12.2010
(73) Proprietor: Alcatel Lucent, 75007 Paris (FR)
(72) Inventor: Chiaroni, Dominique, 92160 Antony (FR); Popa, Daniel, 92240 Malakoff (FR); Morea, Annalisa, 91140 Villebon sur Yvette (FR)
(74) Representative: Croonenbroek, Thomas Jakob

(56) References cited:
- EP-A2- 1 176 846
- EP-A2- 1 198 154
- US-B1- 6 519 058

## Description

### BACKGROUND OF THE INVENTION

The present invention relates to the field of optical systems and more particularly to optical buffers.

One particular implementation of an optical buffer is for example disclosed in EP 1 176 846 A2 (NORTEL NETWORKS LTD) 30 Januari 2002 (2002-01-30).

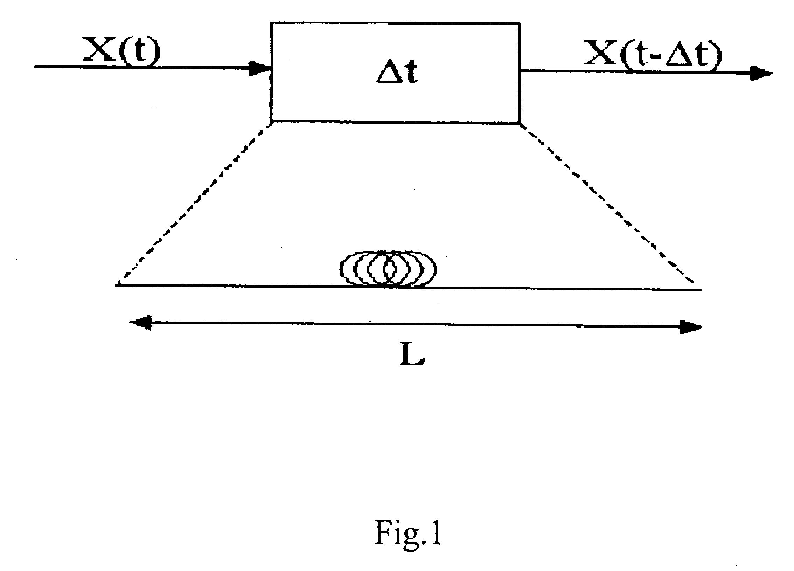

In the past few years, in order to improve the efficiency of the existing optical networks, trend has been to develop transparent networks. Transparent networks, also called all-optical networks, refer to optical networks wherein no optical to electronic conversion of the optical signal is systematically needed from the ingress node to the egress node. Such networks require a knowledge of physical impairment on the signal during the transmission and improved devices have to be available in order to reduce signal impairments along the optical transmission and also to achieve optical packet routing at the network nodes in the optical domain. Therefore, optical devices such as optical buffers need to be developed in order to replace the legacy devices working in the electronic domain. Buffers are required to avoid contention issue in switches when several optical packets compete for the same output port at the same time. Nevertheless, essential electronic buffer features (e.g. large storage size, random and large queuing delay, signal accessibility...) remain difficult to copy in the optical domain. Optical buffers of the state of the art use a plurality of fiber delay lines such as the one described in figure 1 wherein the length of the fiber corresponds to a delay Δt. Thus, by using fiber lines having different lengths, different delays may be created in order to queue the optical packets. However, with such solution, the optical signal cannot be available before the delay Δt of the fiber delay line (i.e. before the optical signal reaches the end of the fiber line) and long queuing delays require huge lines.

### SUMMARY OF THE INVENTION

It is therefore an object of the present invention to overcome the above cited drawbacks of the state of the art and provide a method that allows long term queuing while limiting the fiber delay line lengths.

Thus, the present invention refers to an optical buffer allowing long-duration queuing of optical packets wherein said optical buffer comprises:
- an optical loop, the length of which is logically divided into a plurality of time slots,
- a plurality of optical fibers having different delays and corresponding to the number of time slots of said optical loop wherein a first delay corresponds to the duration of a first time slot and wherein the subsequent delay corresponds to the sum of the duration of the previous delay with the duration of the next subsequent time slot.

According to another embodiment, the optical buffer comprises:
- an input switch allowing to route an optical packet towards one of the optical fibers,
- an intermediate switch allowing to insert an optical packet coming from one of the optical fibers into a time slot of the optical loop,
- an output switch allowing to extract an optical packet from a time slot of the optical loop,
   wherein said input, intermediate and output switches are driven by a scheduler in order to route an optical packet arriving at the input switch to the next available time slot of the optical loop through the adapted optical fiber.

According to an additional embodiment, in case when several optical packets are received at the same time by the input switch, the allocation of said optical packets among the next available time slots of the optical loop is achieved according to predefined priority rules by the scheduler.

According to a supplementary embodiment, amplifiers are used in the optical loop in order to increase the maximum queuing delay.

According to a further embodiment, said amplifiers are erbium-doped fiber amplifiers (EDFAs).

According to another embodiment, said optical buffer comprises several output switches located at different places on the optical loop.

According to an additional embodiment, the output switches are equally spaced around the optical loop.

According to a further embodiment, said optical buffer comprises several intermediate switches located at different places on the optical loop.

According to an additional embodiment, the intermediate switches are equally spaced around the optical loop.

According to another embodiment, the intermediate switches and the output switches are gathered into optimized switching structures capable of inserting and extracting optical packets respectively to and from the optical loop.

The present invention also refers to a method for buffering optical packets wherein the buffering is achieved by an optical loop divided in a plurality of time slots and wherein the distribution of the optical packets among the time slots is achieved thanks to a plurality of optical fibers having different delays, the delay of the first optical fiber corresponding to the duration of a first time slot and the delay of the subsequent optical fiber corresponding to the sum of the duration of the delay of the previous optical fiber with the duration of the next subsequent time slot.

### BRIEF DESCRIPTION OF THE DRAWINGS

FIG.**1** is a diagram representing a fiber delay line;
FIG.**2** is a diagram of a first embodiment of an optical buffer according to the present invention;
FIG.**3** is a diagram representing an optical loop divided into logical time slots according to the present invention;
FIG.**4** is a diagram representing the organization of an optical loop according to the present invention;
FIG.**5** is a diagram of a second embodiment of an optical buffer according to the present invention;
FIG.**6** is a diagram of a third embodiment of an optical buffer according to the present invention;
FIG.**7** is a diagram representing the allocation of the optical packets into the time slots of an optical loop according to the present invention;

### DETAILED DESCRIPTION OF THE INVENTION

As used herein, the term "optical loop" refers to an optical link connected as a loop via an optical packet switch such that optical packets may circulate infinitely through said optical link;

As used herein, the term "optical packet" refers to an optical signal comprising data having the same ingress and egress node;

As used herein, the term "time slot" refers to a portion of a signal;

As used herein, the term "scheduler" refers to an electronic device capable of coordinating other devices in order to achieved scheduled or predefined actions;

As used herein, the term "logically divided" into a plurality of time slots applied to an optical loop or fiber refers to the sharing of the signal capacity along the optical loop or fiber into a plurality of logical time slots.

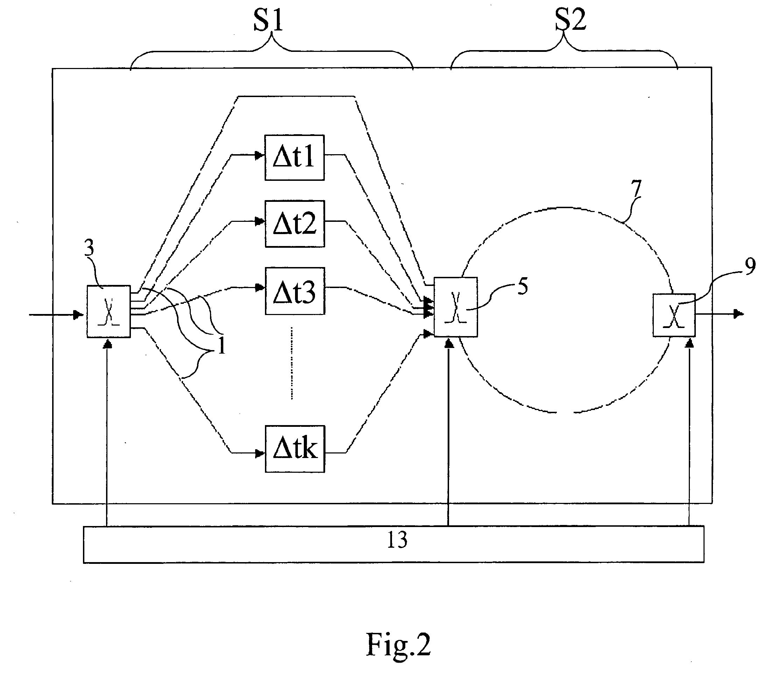

The present invention refers to the use of two optical stages such as described in Fig.2. The first stage S1 corresponds to a distribution stage and the second stage S2 corresponds to a buffering stage.

The first stage S1 comprises a plurality of optical fibers 1 connected on one side to an input switch 3 and on the other side to an intermediate switch 5, said intermediate switch 5 allowing the connection between the first S1 and the second S2 optical stage which is an optical loop 7. The optical fibers 1 have different lengths and therefore produce different delays Δt to the optical packets.

The input switch 3 receives the optical packets needing to be buffered and routes said received optical packets towards the different optical fibers 1.

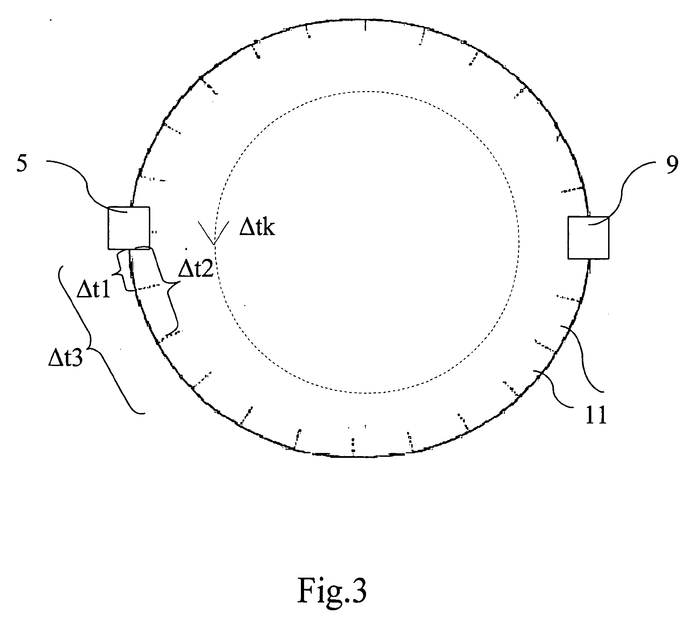

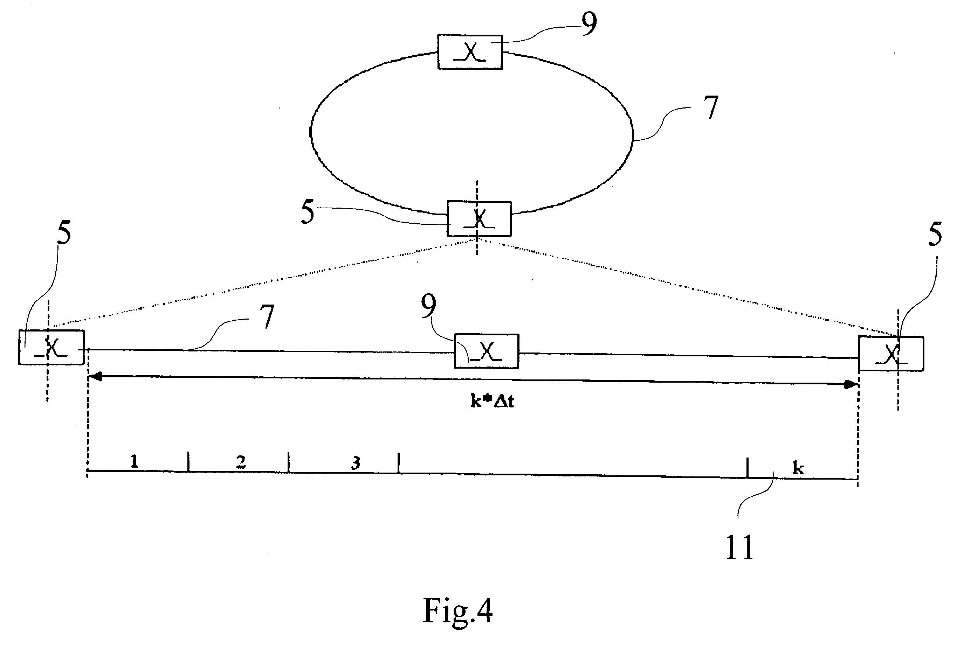

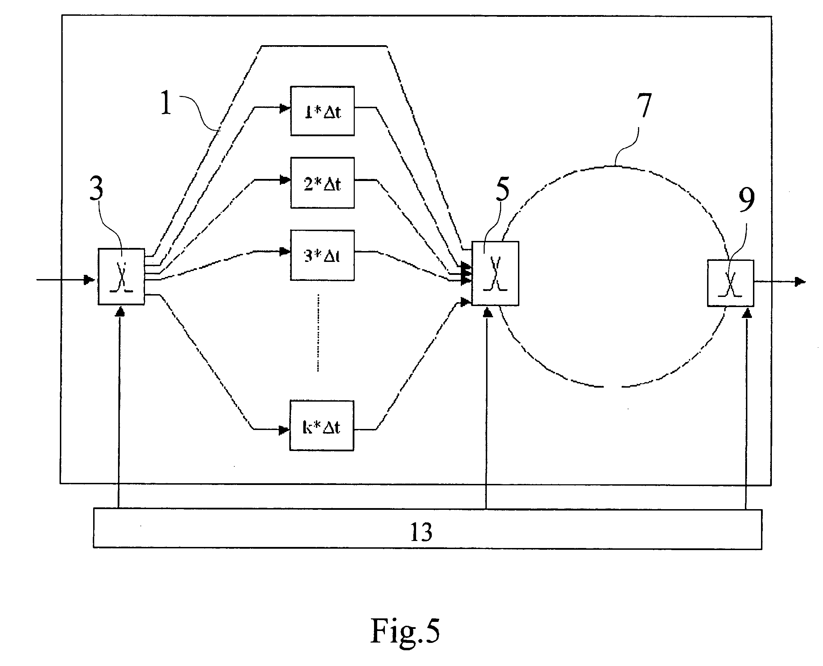

The intermediate switch 5 receives the optical packets transmitted through the optical fibers 1 and inserts them in the optical loop 7. Said optical packets may then remain in the optical loop 7 as long as it is needed and are eventually extracted from the optical loop 7 by an output switch 9. In order to avoid optical packet collisions into the optical loop 7, said optical loop 7 is logically divided into a plurality of time slots 11 as described in figure 3. Thus, an optical packet arriving at the intermediate switch 5 is inserted into a time slot 11. In fact, the delay of each of the optical fibers 1 corresponds to a given number of time slots 11, and the largest delay corresponds to the sum of all the time slots 11 of the optical loop 7. In practice, the time slots 11 are all the same and correspond to an interval Δt as described in figure 4 wherein the optical loop 7 is represented in a longitudinal way. As a consequence, if the (required) number of time slots 11 is k, the number of optical fibers 1 is also k. Then, if the optical fibers are numbered from 1 to k, the delay of an optical fiber 1 corresponds to the number of the optical fiber times the interval Δt as presented in figure 5. Thus, an optical packet arriving at the input switch 3 can be transmitted to or queued in any empty time slot of the optical loop 7 by routing it to the appropriate optical fiber 1, which has the delay equals to the remaining time for the targeted empty time slot to be or to arrive at the intermediate switch 5 location in the optical loop 7.

To manage the functioning of the optical buffer, a time slot 11 comprising an optical packet is set as busy; otherwise, it is set as free, the state change occurring at the intermediate switch 5 and at the output switch 9 when the optical packets are inserted or extracted from the optical loop 7.

The different switches (input 3, intermediate 5 and output 9) are controlled by a scheduler 13. Said scheduler 13 manages the distribution of the optical packets received at the input switch 3 among the optical fibers 1, the insertion of the optical packets in the available time slots of the optical loop 7 and the extraction of said optical packets at the end of the buffering. Moreover, during transmission through the optical fibers 1 and through the optical loop 7, the optical packets undergo impairments that affect the quality of the signal and may reduce the maximum queuing time of the optical buffer. To cope with such issue, optical amplifiers may be implemented along the optical fibers 1 and/or along the optical loop 7. Said amplifiers may be, for example, erbium-doped fiber amplifiers (EDFAs).

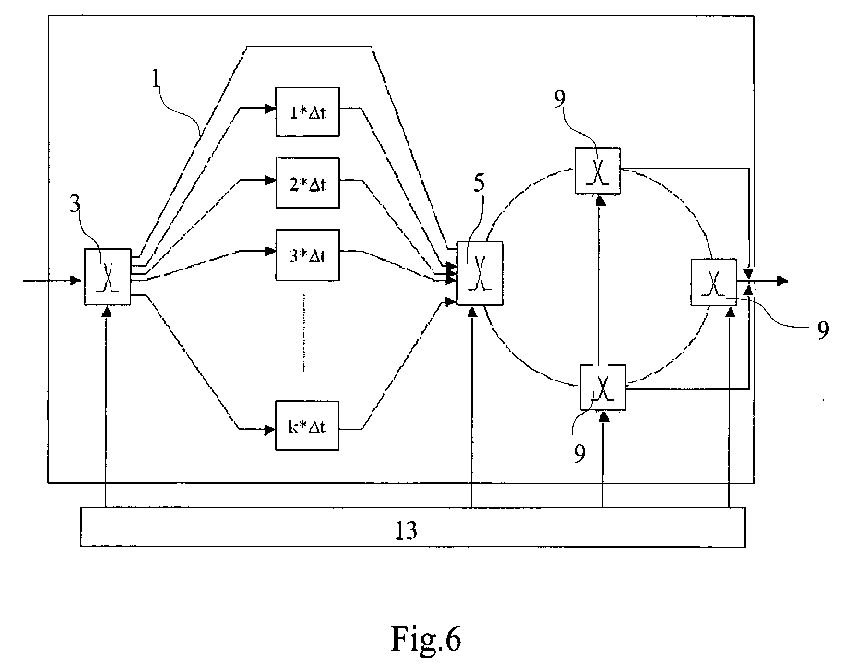

Besides, in case when an optical packet needs to be extracted from the loop, the required time for said packet to be at the location of the output switch 9 may be, in the worst case, equals to (k-1)* Δ t which limits the accessibility of the optical packets. To overcome this drawback, additional output switches 9 may be implemented around the optical loop, as described in figure 6, thus reducing the maximum delay to get the optical packets accessible at the output of the optical buffer. Moreover, when the number of free slots is reduced, optical fibers having high delay need to be used which could be a problem in case of a reduced buffering time. Thus, additional intermediate switches may also be implemented around the optical loop 7 that allows a faster insertion of the received optical packets into the available time slots 11 and reduces the required number of optical fibers 1 in the first stage S1 of the optical buffer. Indeed, if there are k time slots in the optical loop 7 but if there are two intermediate switches 5 located oppositely with respect to the optical loop 7 then only k/2 different delays and therefore k/2 different optical fibers are needed. However, a switch has to be used to route the optical packet toward the appropriate intermediate switch 5.

Intermediate 5 and output 9 switches may also be gathered into optimized switching structures capable of inserting and extracting the optical packets to and from the optical loop 7.

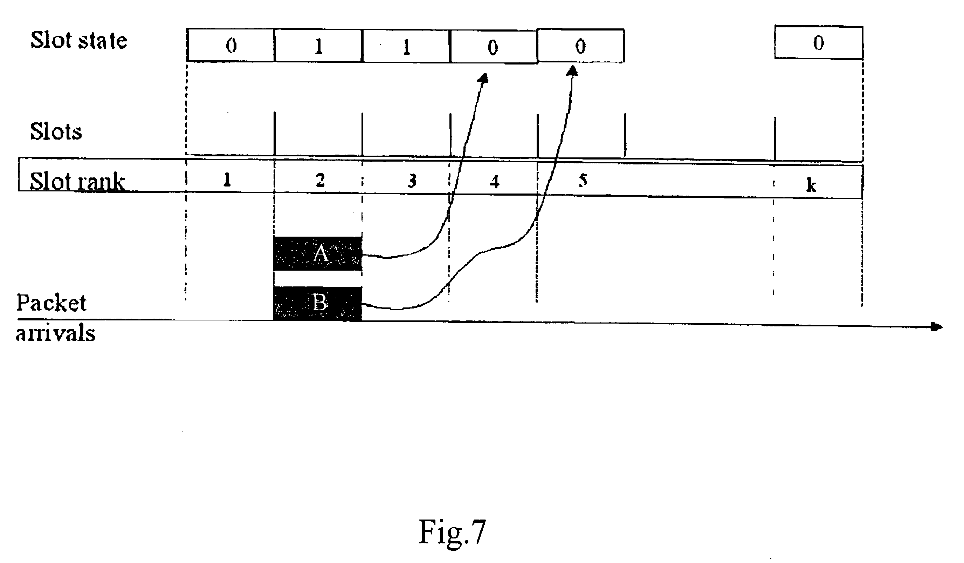

To better understand the present invention, an example of functioning will now be described based on the embodiment presented in figure 5. In this example, two different optical packets A and B are received at the same time at the input switch 3. At the reception of said optical packets, the scheduler 13 determines the next available time slots 11 in the optical loop 7. Figure 7 represents the states of the different time slots 11 of the optical loop 7. The slot 11 state one corresponds to a busy slot whereas the slot 11 state zero corresponds to a free slot 11. The reception of the optical packets A and B occurs at the time when the time slot number 2 (slot rank) is located at the intermediate switch 5. The scheduler 13 determines that the next available time slots 11 (slots number four and five in the present case) and allocate the optical packets A and B respectively to the slot number four and number five. To do so, the optical packet A is routed toward the optical fiber 1 having a delay corresponding to the time shift between the slot number 2 and the slot number 4 which corresponds to a delay of 2* Δt. According to the same principle, the optical packet B is routed to the optical fiber 1 having a delay of 3* Δt. Thus, the optical packet A is received at the intermediate switch 5 at the time when the slot number 4 is also at said intermediate switch 5 location. Therefore, the optical packet A is inserted into the time slot 11 number four. In the same way, the optical packet Bis inserted into the time slot number five. The slot state of the time slots number four and five is then set as one corresponding to busy slots. Both optical packets then circulate around the optical loop 7. When the buffering time of one the optical packet has elapsed, for example the buffering of the optical packet B, the scheduler 11 orders the extraction of the optical packet located in the time slot number five. The extraction is then achieved at the next passage of the time slot number five at the output switch 9. When the extraction is achieved, the state of the slot number five is switched from busy to free (i.e. from one to zero) such that another optical packet arriving at the input switch 3 may be allocated to said empty slot number five by the scheduler 13.

## Claims

1. Optical buffer allowing long-duration queuing of optical packets wherein said optical buffer comprises:
- an optical loop (7), the length of which is logically divided into a plurality of time slots (11),
- a plurality of optical fibers (1) having different delays and corresponding to the number of time slots (11) of said optical loop (7) wherein a first delay corresponds to the duration of a first time slot (11) and wherein the subsequent delay corresponds to the sum of the duration of the previous delay with the duration of the next subsequent time slot (11)
- an input switch (3) allowing to route an optical packet towards one of the optical fibers (1),
- a structure (5) capable of inserting an optical packet to the optical loop (7),
- a structure (9) capable of extracting an optical packet from the optical loop (7).

2. Optical buffer in accordance with claim 1 comprising:
- an input switch (3) allowing to route an optical packet towards one of the optical fibers (1),
- an intermediate switch (5) allowing to insert an optical packet coming from one of the optical fibers (1) into a time slot (11) of the optical loop (7),
- an output switch (9) allowing to extract an optical packet from a time slot (11) of the optical loop (7),
wherein said input (3), intermediate (5) and output (9) switches are driven by a scheduler (13) in order to route an optical packet arriving at the input switch (3) to the next available time slot (11) of the optical loop (7) through the adapted optical fiber (1).

3. Optical buffer in accordance with claim 2 wherein in case when several optical packets are received at the same time by the input switch (3), the allocation of said optical packets among the next available time slots (11) of the optical loop (7) is achieved according to predefined priority rules by the scheduler (13).

4. Optical buffer in accordance with one of the previous claims wherein amplifiers are used in the optical loop (7) in order to increase the maximum queuing delay.

5. Optical buffer in accordance with claim 4 wherein said amplifiers are erbium-doped fiber amplifiers (EDFAs).

6. Optical buffer in accordance with one of the claims from 2 to 5 wherein it comprises several output switches (9) located at different places on the optical loop (7).

7. Optical buffer in accordance with claim 6 wherein the output switches (9) are equally spaced around the optical loop (7).

8. Optical buffer in accordance with one of the claims from 2 to 7 wherein it comprises several intermediate switches (5) located at different places on the optical loop (7).

9. Optical buffer in accordance with claim 8 wherein the intermediate switches (5) are equally spaced around the optical loop (7).

10. Optical buffer in accordance with one of the claim from 2 to 9 wherein the intermediate switches (5) and the output switches (9) are gathered into optimized switching structures capable of inserting and extracting optical packets respectively to and from the optical loop (7).

11. Method for buffering optical packets wherein the buffering is achieved by an optical loop (7), the length of which is logically divided in a plurality of time slots (11) and wherein the distribution of the optical packets among the time slots (11) is achieved thanks to a plurality of optical fibers (1) having different delays, the delay of the first optical fiber corresponding to the duration of a first time slot and the delay of the subsequent optical fiber corresponding to the sum of the duration of the delay of the previous optical fiber with the duration of the next subsequent time slot, by routing received optical packets toward the optical fibers and inserting the optical packets transmitted through the optical fibers in the optical loop.

## Patentansprüche

1. Optischer Pufferspeicher zum langfristigen Einreihen von optischen Paketen in eine Warteschlange, wobei der besagte optische Pufferspeicher umfasst:
- Eine optische Regelschleife (7), deren Länge logisch in eine Vielzahl von Zeitschlitzen (11) unterteilt ist,
- eine Vielzahl von optischen Fasern (1) mit unterschiedlichen Verzögerungen, welche der Anzahl der Zeitschlitze (11) der besagten optischen Regelschleife (7) entsprechen, wobei eine erste Verzögerung der Dauer eines ersten Zeitschlitzes (11) entspricht, und wobei die nachfolgende Verzögerung der Summe der Dauer der vorangehenden Verzögerung und der Dauer des nächsten nachfolgenden Zeitschlitzes (11) entspricht,
- einen Eingangsschalter (3), welcher das Routen eines optischen Pakets an eine der optischen Fasern (1) ermöglicht,
- eine Struktur (5), welche fähig ist, ein optisches Paket in die optische Regelschleife (7) einzufügen,
- eine Struktur (9), welche fähig ist, ein optisches Paket aus der optischen Regelschleife (7) zu extrahieren.

2. Optischer Pufferspeicher nach Anspruch 1, umfassend:
- Einen Eingangsschalter (3), welcher das Routen eines optischen Pakets an eine der optischen Fasern (1) ermöglicht,
- einen Zwischenschalter (5), welcher das Einfügen eines von einer der optischen Fasern (1) kommenden optischen Pakets in einen Zeitschlitz (11) der optischen Regelschleife (7) ermöglicht,
- einen Ausgangsschalter (9), welcher das Extrahieren eines optischen Pakets aus einem Zeitschlitz (11) der optischen Regelschleife (7) ermöglicht,
wobei der besagte Eingangsschalter (3), der besagte Zwischenschalter (5) und der besagte Ausgangsschalter (9) von einem Scheduler (13) angetrieben werden, um ein an dem Eingangsschalter (3) eingehendes optisches Paket über die geeignete optische Faser (1) an den nächsten verfügbaren Zeitschlitz (11) der optischen Regelschleife (7) zu routen.

3. Optischer Pufferspeicher nach Anspruch 2, wobei, wenn mehrere optische Pakete gleichzeitig an dem Eingangsschalter (3) empfangen werden, das Zuteilen der besagten optischen Pakete unter den nächsten verfügbaren Zeitschlitzen (11) der optischen Regelschleife (7) gemäß vordefinierten Prioritätsregeln durch den Scheduler (13) erfolgt.

4. Optischer Pufferspeicher nach einem beliebigen der vorstehenden Ansprüche, wobei in der optischen Regelschleife (7) Verstärker eingesetzt werden, um die maximale Warteschlangenverzögerung zu erhöhen.

5. Optischer Pufferspeicher nach Anspruch 4, wobei die besagten Verstärker erbiumdotierte Faserverstärker (EDFAs) sind.

6. Optischer Pufferspeicher nach einem beliebigen der Ansprüche 2 bis 5, wobei er mehrere Ausgangsschalter (9) umfasst, welche an unterschiedlichen Stellen auf der optischen Regelschleife (7) angeordnet sind.

7. Optischer Pufferspeicher nach Anspruch 6, wobei die Ausgangsschalter (9) in regelmäßigen Abständen rund um die optische Regelschleife (7) angeordnet sind.

8. Optischer Pufferspeicher nach einem der Ansprüche 2 bis 7, wobei er mehrere Zwischenschalter (5) umfasst, welche an unterschiedlichen Stellen auf der optischen Regelschleife (7) angeordnet sind.

9. Optischer Pufferspeicher nach Anspruch 8, wobei die Zwischenschalter (5) in regelmäßigen Abständen rund um die optische Regelschleife (7) angeordnet sind.

10. Optischer Pufferspeicher nach einem der Ansprüche 2 bis 9, wobei die Zwischenschalter (5) und die Ausgangsschalter (9) zu optimierten Schalterstrukturen zusammengefasst sind, welche fähig sind, optische Pakete jeweils in die optische Regelschleife (7) einzufügen oder daraus zu extrahieren.

11. Verfahren zum Zwischenspeichern von optischen Paketen, wobei das Zwischenspeichern durch eine optische Regelschleife (7) erfolgt, deren Länge logisch in eine Vielzahl von Zeitschlitzen (11) unterteilt ist, und wobei das Verteilen der optischen Pakete unter den Zeitschlitzen (11) dank dessen, dass eine Vielzahl von optischen Fasern (1) unterschiedliche Verzögerungen aufweisen, wobei die Verzögerung der ersten optischen Faser der Dauer eines ersten Zeitschlitzes entspricht und die Verzögerung der nachfolgenden optischen Faser der Summe der Dauer der Verzögerung der vorangehenden optischen Faser und der Dauer des nächsten nachfolgenden Zeitschlitzes entspricht, durch Routen von empfangenen optischen Paketen an die optischen Fasern und Einfügen der über die optischen Fasern übertragenen optischen Pakete in die optische Regelschleife erfolgt.

## Revendications

1. Tampon optique permettant la mise en file d'attente de longue durée de paquets optiques, ledit tampon optique comprenant :
- une boucle optique (7), dont la longueur est logiquement divisée en une pluralité de créneaux temporels (11),
- une pluralité de fibres optiques (1) ayant des retards différents et correspondant au nombre de créneaux temporels (11) de ladite boucle optique (7) dans lequel un premier retard correspond à la durée d'un premier créneau temporel (11) et dans lequel le retard suivant correspond à la somme de la durée du retard précédent et de la durée du créneau temporel ultérieur suivant (11)
- un commutateur d'entrée (3) permettant d'acheminer un paquet optique vers une des fibres optiques (1),
- une structure (5) pouvant insérer un paquet optique dans la boucle optique (7),
- une structure (9) pouvant extraire un paquet optique de la boucle optique (7).

2. Tampon optique selon la revendication 1 comprenant :
- un commutateur d'entrée (3) permettant d'acheminer un paquet optique vers une des fibres optiques (1),
- un commutateur intermédiaire (5) permettant d'insérer un paquet optique provenant d'une des fibres optiques (1) dans un créneau temporel (11) de la boucle optique (7),
- un commutateur de sortie (9) permettant d'extraire un paquet optique d'un créneau temporel (11) de la boucle optique (7),
dans lequel lesdits commutateurs d'entrée (3), intermédiaire (5) et de sortie (9) sont commandés par un programmateur (13) afin d'acheminer un paquet optique arrivant au niveau du commutateur d'entrée (3) vers le créneau temporel disponible suivant (11) de la boucle optique (7) à travers la fibre optique adaptée (1).

3. Tampon optique selon la revendication 2 dans lequel, dans le cas où plusieurs paquets optiques sont reçus simultanément par le commutateur d'entrée (3), l'attribution desdits paquets optiques parmi les créneaux temporels disponibles suivants (11) de la boucle optique (7) est réalisée conformément à des règles de priorité prédéfinies par le programmateur (13).

4. Tampon optique selon l'une des revendications précédentes dans lequel des amplificateurs sont utilisés dans la boucle optique (7) afin d'augmenter le retard de mise en file d'attente maximum.

5. Tampon optique selon la revendication 4 dans lequel lesdits amplificateurs sont des amplificateurs à fibre dopée à l'erbium (EDFA).

6. Tampon optique selon l'une des revendications 2 à 5 comprenant plusieurs commutateurs de sortie (9) situés à différents emplacements sur la boucle optique (7).

7. Tampon optique selon la revendication 6 dans lequel les commutateurs de sortie (9) sont équidistants autour de la boucle optique (7).

8. Tampon optique selon l'une des revendications 2 à 7 comprenant plusieurs commutateurs intermédiaires (5) situés à différents emplacements sur la boucle optique (7).

9. Tampon optique selon la revendication 8 dans lequel les commutateurs intermédiaires (5) sont équidistants autour de la boucle optique (7).

10. Tampon optique selon l'une des revendications 2 à 9 dans lequel les commutateurs intermédiaires (5) et les commutateurs de sortie (9) sont rassemblés dans des structures de commutation optimisées pouvant insérer des paquets optiques dans la boucle optique (7) et les extraire de celle-ci.

11. Procédé pour mettre en tampon des paquets optiques dans lequel la mise en tampon est réalisée par une boucle optique (7), dont la longueur est logiquement divisée en une pluralité de créneaux temporels (11) et dans lequel la distribution des paquets optiques parmi les créneaux temporels (11) est réalisée grâce à une pluralité de fibres optiques (1) ayant des retards différents, le retard de la première fibre optique correspondant à la durée d'un premier créneau temporel et le retard de la fibre optique suivante correspondant à la somme de la durée du retard de la fibre optique précédente et de la durée du créneau temporel ultérieur suivant, en acheminant des paquets optiques reçus vers les fibres optiques et en insérant les paquets optiques transmis à travers les fibres optiques dans la boucle optique.
